# EUROPEAN PATENT SPECIFICATION

(11) **EP 3 000 429 B1**
(45) Date of publication and mention of the grant of the patent: **24.04.2019**
(21) Application number: 15186220.8
(22) Date of filing: 22.09.2015
(51) Int. Cl.: A61C 8/00

(54) **DENTAL INTERFACE**
DENTALSCHNITTSTELLE
INTERFACE DENTAIRE

(30) Priority: 23.09.2014 ES 201431382
(43) Date of publication of application: 30.03.2016
(73) Proprietor: Createch Medical, S.L., 20850 Mendaro (Guipúzcoa) (ES)
(72) Inventor: URZAINQUI BERISTAIN, Ruben, 20600 EIBAR (Guipuzcoa) (ES)
(74) Representative: Ungria López, Javier

(56) References cited:
- WO-A1-97/14371
- WO-A1-2004/105632
- WO-A1-2009/127880
- DE-A1-102012 106 468
- KR-A- 20010 091 658

## Description

### OBJECT OF THE INVENTION

This invention refers to a dental interface with geometrical characteristics which allow correcting the alignment of an implant in which the prosthetic is inserted and thus allowing correcting possible deviations between the implant and the prosthetic. Specifically, it prevents the screw holding the prosthetic from emerging through the aesthetic part of the prosthetic. The dental interface is for use in the dental prosthetics industry, especially in the field of dental implantology.

### TECHNICAL PROBLEM TO ADDRESS AND BACKGROUND TO THE INVENTION

Dental prosthetics are formed of two parts: the implant, strictly speaking, which is inserted in the patient's bone and acts as a base, and the prosthetic itself, which is positioned on the implant. They may be fixed prosthetics (cannot be removed) or prosthetics which can be extracted by the patient.

Depending on the way the fixed prosthetic is positioned on the implant, there are two types of dental prosthetics: screw-in prosthetics and cemented prosthetics.

Screw-in prosthetics can be further subdivided into one-piece prosthetics and cement-screwed prosthetics: the latter require an interface which forms a joining element between the implant positioned in the patient's bone and the fixed prosthetic.

The interfaces are fixed to the implant by means of a screw; furthermore, the interfaces known up until now are straight, and when a straight interface has to be inserted in a sloping position, the aforementioned straight interface has a side opening which provides access for a sloping wrench which tightens the interface on the implant.

An example of connector between an implant and an abutment is disclosed in WO97/14371.

Sometimes, because of complications in surgery or the morphology of the bone itself, implants are positioned in such a way that they are facing an aesthetic area of the prosthetic. In such cases, the holding screws pass through the aesthetic area, which creates an unwanted situation in the patient's teeth.

### DESCRIPTION OF THE INVENTION

The invention described discloses an interface for dental prosthetics to be placed on at least one implant according to claim 1, which comprises:
- an area of contact with the implant which comprises a first shaft which coincides with the shaft of the implant,
- a sloping area comprising a second area and a sloping face and
- an internal orifice in the two areas,
wherein in the interface, the first shaft and the second shaft intersect and form between them an angle at the intersection, where the area of contact and the sloping area make a one-piece-interface; and wherein the internal orifice comprises:
- a first part (15) in the sloping area (3), and
- a second part (16) in the contact area (2),
in such a way that the first part (15) has the shape of a first truncated cone sector and the second part (16) has the shape of a second truncated cone sector, in which at least one generatrix of the first truncated cone sector in the first part (15) of the internal orifice (10) is a continuation of a generatrix of the second truncated cone sector in the second part (16) of the internal orifice (10), in such a way that both truncated cones share the base.

The angle of intersection between the first shaft and the second shaft is comprised in a range between 90° and 180°.

In addition, as disclosed in claims 2 and 3, the interface comprises a screw for fixing it to the implant, which is placed in a screw housing incorporated in the contact area of the interface.

In order for the screw which is positioned to fix the interface to the implant to reach the screw housing, as previously stated the interface comprises an internal orifice which extends along the two areas, with said internal orifice comprising two distinct parts: a first part which runs along the sloping area and a second part which runs along the contact area.

As previously stated, the first part of the internal orifice of the interface has the shape of a first sector of truncated cone, and the second part of the internal orifice of the interface has the shape of a second sector of truncated cone; in addition, at least one generatrix of the first sector of truncated cone of the first part of the internal orifice is the continuation of a generatrix of the second sector of truncated cone of the second part of the internal orifice, in which the two truncated cones share the base. This base can be shaped as a circumference or as an ellipse.

### DESCRIPTION OF THE FIGURES

To complete the description and in order to give a better understanding of the characteristics of the invention, this descriptive report is accompanied by a series of drawings that are an integral part of the report, wherein, for illustration purposes and without limitation, the following has been represented:

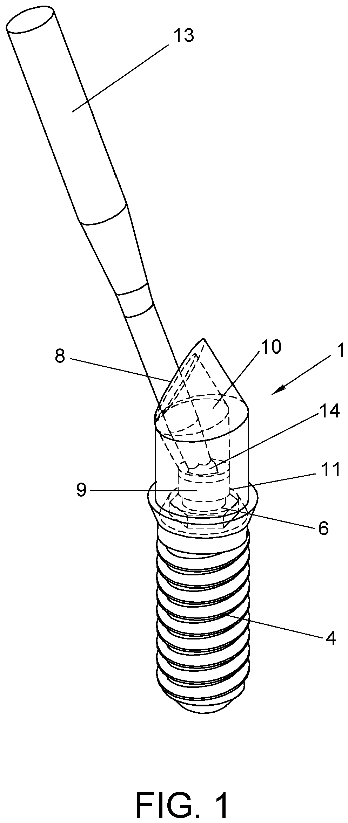

Figure 1 is a perspective view of the interface which is the object of the invention.

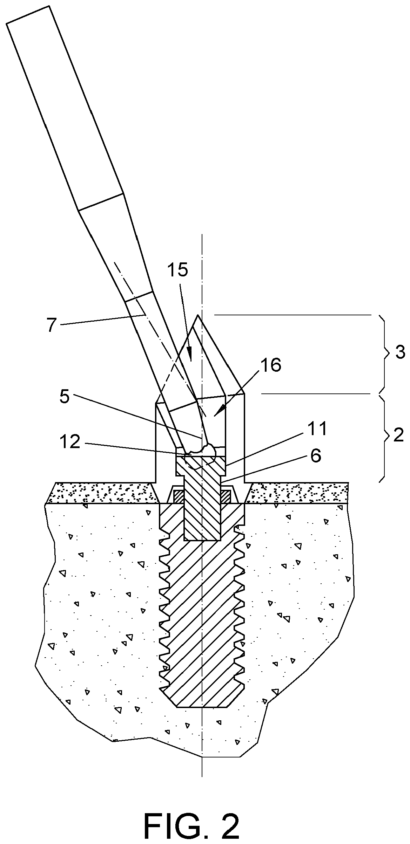

Figure 2 is cross-sectional side view of an interface which is the object of the invention, positioned on a patient's gum.

The different numerical references featured in the figures correspond to the following elements:
1.- interface,
2.- contact area,
3.- sloping area,
4.- implant,
5.- first shaft,
6.- screw housing,
7.- second shaft,
8.- sloping face,
9.- screw,
10.- internal orifice,
11.- head,
12.- wrench housing,
13.- wrench,
14.- tip,
15.- first part of the internal orifice, and
16.- second part of the internal orifice.

### PREFERRED EMBODIMENT OF THE INVENTION

As already indicated, and as can be seen in the figures, the object of the intervention is an interface (1) for a dental prosthetic which corrects possible problems of the screws (9) passing through aesthetic areas of the prosthetic, which are caused by the position and direction of the implants, by means of an angulation.

The interface (1) object of the invention comprises two areas:
- an area of contact (2) with the implant (4) which comprises a first shaft (5) which coincides with the shaft of the implant (4), in which said area of contact (2) comprises a screw housing (6), and
- a sloping area (3) comprising a second shaft (7) which is sloping with regard to the first shaft (5) of the contact area (2), and a sloping face (8).

The dimensions of the sloping area (3) of the interface (1) are variable, so that they can be adapted to the different requirements of the fixed prosthetics supported on the interface (1) object of the invention; the condition met is that of maintaining the orientation of the sloping face (8) of the sloping area (3).

The interface (1) object of the invention comprises a screw (9) for fixing it to the implant (4) located in the patient's gum, which is positioned in the screw housing (6) of the contact area (2) of the interface (1).

As the screw (9) is positioned in the screw housing (6) of the interface (1) and said screw housing (6) is located inside the contact area (2) of the interface (1), the interface (1) comprises an internal orifice (10) so that the screw (9) passes through the two areas (2, 3) of the interface (1) until it reaches the screw housing (6).

The internal orifice (10) comprises two distinct parts: a first part (15) which runs along the sloping area (3) of the interface (1) and a second part (16) which runs along the contact area (2) of the interface (1); the first part (15) of the internal orifice (10) has the shape of a first truncated cone sector and the second part (16) of the internal orifice (10) has the shape of a second truncated cone sector, in such a way that the two truncated cones share the base, and a generatrix of the first truncated cone sector in the first part (15) of the internal orifice (10) is a continuation of a generatrix of the second truncated cone sector in the second part (16) of the internal orifice (10).

The base shared by the first part (15) and the second part (16) can have the shape of a circumference or an ellipse.

The screw (9) comprises a head (11) with a housing for a wrench (12) especially designed so that a wrench (13) can be used to tighten the screw (9) on the implant (4) through the internal orifice (10); both the housing for the wrench (12) in the screw head (11) and the wrench (13) with a special tip (14) for tightening the screw (9) from angular positions are already known in the state of the art.

The invention should not be seen as limited to the particular embodiment described in this document. Those skilled in the art can develop other embodiments in view of the disclosure made herein. In consequence, the scope of the invention is defined by the claims that follow.

## Claims

1. interface (1) for dental prosthetics to be placed on at least one implant (4) comprising:
- an area of contact (2) with the implant (4) which comprises a first shaft (5) which coincides with the shaft of the implant (4),
- a sloping area (3) which comprises a second shaft (7) and a sloping face (8), and
- an internal orifice (10) in the two areas (2, 3),
in such a way that the first shaft (5) and the second shaft (7) intersect and form an angle at the intersection where the area of contact(2) and the sloping area (3) make a one-piece interface (1);
**characterised in that** the internal orifice (10) comprises:
- a first part (15) in the sloping area (3), and
- a second part (16) in the contact area (2),
in such a way that the first part (15) has the shape of a first truncated cone sector and the second part (16) has the shape of a second truncated cone sector, in which at least one generatrix of the first truncated cone sector in the first part (15) of the internal orifice (10) is a continuation of a generatrix of the second truncated cone sector in the second part (16) of the internal orifice (10), in such a way that both truncated cones share the base.

2. interface (1) for dental prosthetics to be placed on at least one implant (4) according to claim 1, **characterised in that** it comprises a screw (9) for fixing it to the implant (4).

3. interface (1) for dental prosthetics to be placed on at least one implant (4) according to claim 1, **characterised in that** the contact area (2) comprises a screw housing (6).

## Patentansprüche

1. Schnittstelle (1) für Dental-Prothesen, die auf wenigstens ein Implantat (4) aufgesetzt wird, wobei sie umfasst:
- einen Bereich (2) für Kontakt mit dem Implantat (4), der einen ersten Schaft (5) umfasst, der sich mit dem Schaft des Implantats (4) deckt,
- einen geneigten Bereich (3), der einen zweiten Schaft (7) und eine geneigte Fläche (8) umfasst,
sowie
- eine innere Öffnung (10) in den zwei Bereichen (2, 3),
so dass sich der erste Schaft (5) und der zweite Schaft (7) schneiden und einen Winkel an der Schnittfläche bilden, an der der Kontaktbereich (2) und der geneigte Bereich (3) eine aus einem Teil bestehende Schnittstelle (1) bilden, **dadurch gekennzeichnet, dass** die innere Öffnung (10) umfasst:
- einen ersten Teil (15) in dem geneigten Bereich (3), sowie
- einen zweiten Teil (16) in dem Kontaktbereich (2),
so dass der erste Teil (15) die Form eines ersten Kegelstumpf-Sektors hat und der zweite Teil (16) die Form eines zweiten Kegelstumpf-Sektors hat und dabei wenigstens eine Erzeugende des ersten Kegelstumpf-Sektors in dem ersten Teil (15) der inneren Öffnung (10) eine Fortsetzung einer Erzeugenden des zweiten Kegelstumpf-Sektors in dem zweiten Teil (16) der inneren Öffnung (10) ist, und sich so beide Kegelstümpfe die Basis teilen.

2. Schnittstelle (1) für Dental-Prothesen, die auf wenigstens ein Implantat (4) aufgesetzt wird, nach Anspruch 1, **dadurch gekennzeichnet, dass** sie eine Schraube (9) zum Befestigen an dem Implantat (4) umfasst.

3. Schnittstelle (1) für Dental-Prothesen, die auf wenigstens ein Implantat (4) aufgesetzt wird, nach Anspruch 1, **dadurch gekennzeichnet, dass** der Kontaktbereich (2) eine Schrauben-Aufnahme (6) umfasst.

## Revendications

1. Interface (1) pour des prothèses dentaires à poser sur au moins un implant (4) comprenant :
- une zone de contact (2) avec l'implant (4) qui comprend une première tige (5) qui coïncide avec la tige de l'implant (4),
- une zone inclinée (3) qui comprend une deuxième tige (7) et une face inclinée (8), et
- un orifice interne (10) aménagé dans les deux zones (2, 3),
de telle manière que la première tige (5) et la deuxième tige (7) soient en intersection et forment un angle à l'intersection, au niveau de laquelle la zone de contact (2) et la zone inclinée (3) forment une interface (1) en une pièce ;
**caractérisé en ce que** l'orifice interne (10) comprend :
- une première partie (15) dans la zone inclinée (3), et
- une deuxième partie (16) dans la zone de contact (2),
de telle sorte que la première partie (15) a la forme d'un premier secteur en tronc de cône et la deuxième partie (16) a la forme d'un deuxième secteur en tronc de cône, au moins une génératrice du premier secteur en tronc de cône dans la première partie (15) de l'orifice interne (10) est une continuation d'une génératrice du deuxième secteur en tronc de cône dans la deuxième partie (16) de l'orifice interne (10), de telle sorte que les deux troncs de cône partagent la base.

2. Interface (1) pour des prothèses dentaires à poser sur au moins un implant (4) selon la revendication 1, **caractérisée en ce qu'**elle comprend une vis (9) pour sa fixation sur l'implant (4).

3. Interface (1) pour des prothèses dentaires à poser sur au moins un implant (4) selon la revendication 1, **caractérisée en ce que** la zone de contact (2) comprend un logement de vis (6).
